# EUROPÄISCHE PATENTANMELDUNG

(11) **EP 2 322 329 A1**
(43) Veröffentlichungstag der Anmeldung: **18.05.2011**
(21) Anmeldenummer: 10014498.9
(22) Anmeldetag: 11.11.2010
(51) Int. Cl.: B26D 5/34, B32B 37/12

(54) **Laminierverfahren und Verfahren und Vorrichtung zum Trennen von Laminat**

(30) Priorität: 13.11.2009 DE 102009053097
(71) Anmelder: Steinemann Technology AG, 9015 St. Gallen (CH)
(72) Erfinder: Walther, Thomas, 9000 St. Gallen (CH)
(74) Vertreter: Arat, Dogan

(57) **Zusammenfassung**

Verfahren zum Beschichten eines Trägermaterials (2) mit einem Druckverfahren vorbedruckten bahnförmigen Laminiermaterials (3), wobei das Trägermaterial (1, 2) und das Laminiermaterial (3) in einem Kaschierspalt, gebildet aus einer Kaschierwalze (5) und einer Gegendruckwalze (6), unter Aufbringung von Druckkräften mittels eines Klebstoffes zu einem Laminat (7) verbunden wird, um das bahnförmige Laminat (7) anschliessend durch eine Schneidvorrichtung (9) wieder in Einzelbogen bzw. Einzelnutzen getrennt wird, wobei Teile des Druckbilds auf dem Laminiermaterial (3) und/oder auf das Laminiermaterial (3) aufgedruckte Marken durch einen oder mehrere Sensoren (8) erfasst und aus den erfassten Signalen Steuerungssignale für die Transportrichtung dem oder den Sensoren (8) nachgeordnete Schneidvorrichtung (9) oder Stanzvorrichtung (9) abgeleitet werden, die dazu dient das bahnförmige Laminat (7) aus Trägermaterial (2) und Laminiermaterial (3) wieder in Einzelbogen bzw. Einzelnutzen zu trennen. Zusätzlich wird eine geeignete Vorrichtung zur Durchführung des Verfahrens beschrieben.

## Beschreibung

Die Erfindung betrifft ein Verfahren nach dem Oberbegriff des Anspruchs 1 und eine Vorrichtung nach Anspruch 7.

### Stand der Technik

Die Trennung einer endlosen Laminatbahn ist unter anderem in der EP 1282510 offenbart. Die Einzelbogen werden der Kaschierstation zugeführt und das Laminat einer Schneidstation vorbeigeführt. Hierbei werden die Trennstellen noch vor der Kaschierung laufend durch einen Kantensensor an der oberen Hinterkante der Bogen detektiert. Die Bogen werden dabei in der Regel unterschuppt der Kaschierstation zugeführt, so dass der Hinterkantensensor einen klare Hinterkante sicher detektieren kann. Die Schneidfunktion wird anhand der detektierten Signale eingeleitet. Die DE 10 2008 011 544 offenbart eine Weiterbildung des Verfahrens gemäss der EP 1282510 auf, wobei eine Zweipunktemessung an der Hinterkante erfolgt. Anhand der detektierten Signale wird ein Schneidmesser gesteuert, so dass anhand der aktuell vorliegenden Bogenlage ein sauberer Schnitt an der Bogenhinterkante erfolgt. Die Trennung erfolgt immer an der Bogenhinterkante. Ein Laminat kann aber mehrere Nutzen aufweisen, die später zu einem Druckprodukt verarbeitet werden. Eine Trennung innerhalb eines Laminats in einzelne Nutzen ist in der EP 1282510 oder der DE 10 2008 011 544 nicht vorgesehen.

Es sind auf Verfahren bekannt, bei denen ein Ausschneiden von Öffnungen oder Abschnitte in eine laufende bedruckte Bahn anhand von Marken erfolgt, die in einem Druckbild vorhanden sind. Ein gattungsmässiger Vertreter einer solchen Druckmarkensteuerung einer Schneide- / Stanzeinheit ist unter anderem in der EP1798178 zu finden. Die Steuerung anhand von Marken dient aber nur dazu die Registergenauigkeit zu verbessern. Ein Bezug auf das Weiterverarbeiten eines Laminats in einer Laminiermaschine ist nicht gegeben. Ferner ist kein Bezug auf wechselnde Nutzengrössen bzw. wechselnde Nutzenabschnitte vorgesehen, wie sie in dem Digitaldruck möglich und üblich sind.

Die DE 26 06 164 beschreibt eine Verfahren zum Trennen von vorgedruckten Film, wobei die Schneidevorrichtung in der Form eines rotierendes Messers anhand von mit gedruckten Marken gesteuert wird. Die Druckmarken werden mit Sensoren abgetastet und die gewonnenen Signale zur Ansteuerung der Schneidvorrichtung genutzt. Ein Bezug zur Nutzung in Laminiermaschinen zum Schneiden eines Laminats ist nicht gegeben.

In dem Textildruck werden Abschnitte ebenfalls anhand von mit gedruckten Schnittmarken detektiert. Die DE 20 2007 000 719 U1 offenbart eine automatische Textilzuschnittmaschine, bei der eine veränderte Position von Schnittteilen anhand einer Rapportmarke auf dem Textil vermerkt und erkannt werden kann. Die Steuerung einer Schneidvorrichtung anhand von mit gedruckten Marken ist daher auch der Textilindustrie bekannt. Das Tätigkeitsfeld Zuschneiden von Textil hat aber keinen Bezug zu dem Einsatz in einer Laminiermaschine zum Zwecke des Schneidens eines Laminats.

Die Laminierung von dünnen, bedruckten Filmen oder Papierbahnen auf biegesteifes Material ist unter anderem in dem Bereich des Verpackungsdruck von grossem Interesse. Verschiedenste Anwendungen sind aus dem Stand der Technik bekannt.

Für die Beschichtung von metallischen Trägermaterialien mit einem Beschichtungsmaterial sind unterschiedliche Verfahren bekannt. Ziel der Beschichtung ist es die Metalloberfläche zu schützen und diese optisch und haptisch aufzuwerten. Beispielweise werden für die Herstellung von lackierten und bedruckten Metalltafel UVreagierende oder lösemittelhaltige Druckfarben und Lacke eingesetzt. Beide Systeme kommen aber immer mehr in Verruf, da UV - Lacke und Farben zu lebensmittelrechtlichen Problemen aufgrund von Migration führen können, während lösemittelhaltige Lacke und Druckfarben umweltbelastend sind.

Daher kommt die Beschichtung mit bahnförmigen Beschichtungsmaterial im Form von Kunststofffolien oder dünnen Papieren aus Umweltgründen immer mehr in den Fokus. Die Beschichtung von Metallplatten mit Folie ist unter anderem aus den Schriften DE 10 2005 015 295, WO 97/21542 und US 6,129, 800 vorbekannt. Die DE 10 2005 015 295 beschreibt die Beschichtung mit bedrucktem und unbedruckten Beschichtungsmaterial, das aus Kunststoff-, Leder- oder Papier bestehen kann.

Die Beschichtung mit bedrucktem Film ist deswegen für viele Verpackungshersteller interessant, da die Folien im Digitaldruck bedruckt werden können. Viele Digitaldruckmaschinen können nur von der Rolle arbeiten und sind daher für biegesteife und starre Materialien, wie Blech, aber auch Karton, nicht oder nur bedingt geeignet. Ferner kann die Folie so laminiert werden, dass die Druckseite gegen das biegesteife Trägermaterial laminiert wird und somit das Druckbild durch die Folie geschützt wird. Zusätzlich entsteht eine optisch ansprechende Oberfläche, da viele in einem Digitaldruckverfahren bedruckte Druckprodukte sich nur schwer lackieren lassen. Der Grund liegt in der Topographie des Drucks und der oftmals geringen Oberflächenspannung des Druckmaterials. Durch eine Abdeckung mit einer Folie wird der Druck optisch interessant aufgewertet, ohne dass die aufgezählten Nachteile entstehen.

### Aufgabe der Erfindung

Der Erfindung liegt daher das Problem zu Grunde eine registergenaue Laminierung von einer vorbedruckten Bahn auf ein biegesteiferes Trägermaterial zu schaffen mit dem Ziel letztendlich einen Formatbogen vorliegen zu haben, der eine hohe Registergenauigkeit des vordruckten Laminiermaterials bezogen auf die Vorderkante oder ein anderes geeignetes Bezugsmass des Formatbogens aufweist.

### Lösung der Aufgabe

Zur Lösung der Aufgabe führt der kennzeichnende Teil der Ansprüche 1 und 7. Sinnvolle Weiterbildungen ergeben sich aus den jeweiligen Unteransprüchen.

Eine relativ dünne und endlose Folie aus einem Kunststoffmaterial oder eine Papierbahn wird mit dem bahnförmigen Trägermaterial einer Laminiereinheit mit gegendruckbeaufschlagtem Walzenpaar zugeführt und in dem Walzenspalt laminiert. Die Haftung zwischen der Folienbahn kann durch verschiedene Verfahrensvarianten herbeigeführt werden (z.B. Dispersions- Thermo-, Hotmelt-, SF- (Polyurethan-) oder UV - Kleber). Die Aufzählung ist nicht beschränkend und prinzipiell kann jeder geeignete Klebstofftyp für das Verbinden der Laminatlagen eingesetzt werden.

Die dünne und endlose Folie kann mit einem Motiv bedruckt sein. Die Bedruckung kann in einem Digitaldruckverfahren erfolgt sein, wobei die Nutzengrössen und die Nutzenlage innerhalb eines Drucklaufs verändert werden kann. Unter dem Begriff Digitaldruck fallen unter anderem das Tintenstrahldruckverfahren, Tonerdruckverfahren mit festen oder flüssigen Toner, Thermographiedruckverfahren, d. h. alle Druckverfahren, die eine Druckbildveränderung während des Drucklaufs von Nutzen zu Nutzen erlauben und aus einem digitalen Datenbestand ohne Druckform arbeiten. Digitaldruckverfahren müssen aber nicht zwangsläufig variable Daten drucken, sondern können auch durchaus für den Druck mehrerer gleichartiger Drucknutzen eingesetzt werden.

Konventionelle Druckverfahren sind Druckverfahren, die von einer Druckform arbeiten. In diesem Fall muss in der Regel die Druckform bei einem Druckbildwechsel ebenfalls gewechselt werden. Unter diese Druckverfahren fallen unter anderem der Flachsiebdruck, der rotative Siebdruck, der Flexodruck, der Hochdruck, der Tief- und der Offsetdruck.

Weiterverarbeitung überführt werden. Dazu muss die endlose Bahn des Laminats wieder in einzelne Abschnitte getrennt werden. Hierzu sind verschiedene Verfahren aus dem Stand der Technik bekannt, die anhand von Signalen eine solche Schneidvorrichtung steuern,

Als Laminiermaterial wird im folgenden die bedruckte Folien- bzw. Papierbahn bezeichnet, während als Trägermaterial das biegesteifere Grundmaterial bezeichnet wird.

Bevorzugt werden bei dem Druck des Motivs auf dem Laminiermaterial in einem Druckverfahren gleichzeitig mit dem Bild / Textdruck eine oder mehrere Schnittmarken mit gedruckt, die standgerecht zu dem gewünschten späteren Formatausschnitt stehen. Alternativ können als Schnittmarken auch Bestandteile des Druckbildes genommen werden, die als Trigger für die Schneidvorrichtung geeignet sind. Beispielhaft kann dies eine Bildkante sein, wobei das Triggersignal dann gegebenenfalls mit einem Offset versehen den Schneidvorgang auslöst.

Das Trägermaterial kann bevorzugt 0eine Blechmaterialbahn oder eine andere metallische Bahn, beispielsweise eine Aluminiummaterialbahn sein.

Das Trägermaterial kann in einem anderen Ausführungsbeipiel auch eine Faltschachtelkartonbahn sein, dessen Biegesteifigkeit zwischen 2,5 und 150 mNm, gemessen nach DIN 53121, liegt.

Die Sensoren zur Erkennung der Bildmerkmale und / oder der auf dem vorgedruckten Laminiermaterial aufgedruckten Marke bzw. Marken können je nach Anwendungsbereich oder Nutzerentscheidung eine oder mehrere Sensoren sein. Bei den Sensoren kommen opto-elektronische Sensoren, zum Beispiel ein Lasersensor, oder eine oder mehrere Kamera bzw. Kameras mit nachgeschalteter Bildverarbeitung in Betracht.

Die Sensoren sind in Produktionsflussrichtung nach dem Kaschierspalt, der zwischen einer Kaschierwalze und einer Gegendruckwalze gebildet wird, in dem das Trägermaterial mit dem Laminiermaterial zu einem Laminat verbunden wird, und vor der Schneidvorrichtung angeordnet sind.

Vor dem Erreichen des Kaschierspalts, der zwischen Kaschierwalze und Gegendruckwalze gebildet wird, wird auf das Trägermaterial und /oder das Laminiermaterial mittels einer Klebstoffauftragsvorrichtung eine Klebstoffschicht aufgetragen. Die Klebstoffauftragsvorrichtung ist ein Walzenauftragswerk, ein Düsenauftragswerk mit einer oder mehreren Düsen, eine Auftragswerk mit einer Breitschlitzdüse, oder jedes andere geeignete Auftragswerk sein kann.

Das Laminiermaterial wird in einem Digitaldruckverfahren, zum Beispiel im Inkjetdruck oder in einem Trocken- oder Flüssigtonerdruckverfahren, bedruckt.

Das Laminiermaterial wird in einem konventionellen Druckverfahren, zum Beispiel im Sieb-, Tief- Flexo- oder Offsetdruck bedruckt.

In Transportrichtung des Laminiermaterials werden beispielsweise Drucknutzen unterschiedlicher Grösse auf das Laminiermaterial aufgedruckt. Dabei können die Drucknutzen abschnittsweise oder von Nutzen zu Nutzen unterschiedlich sein.

Das bedruckte Laminiermaterial kann entweder direkt von der Druckmaschine ohne zwischenzeitliche Aufrollung als Bahn der Laminiereinrichtung zugeführt werden.

Die erfindungsgemässe Vorrichtung weist zusätzlich einen Sensor bzw. Sensoren (8) auf, die Teile des auf dem Laminiermaterial befindlichen Druckbildes oder dort aufgedruckte Marken auswertet und die gewonnenen Signale zur Ansteuerung der Trennvorrichtung dienen.

Als Marken kommen neben Strichcodes auch andere Symbole, Bilder, Figuren Buchstaben oder Buchstaben-/Zahlenkombinationen in Betracht. Ebenso kommen zwei oder dreidimensional Markierungen in Betracht, welche von den Sensoren oder der nachgeschalteten Bildverarbeitung als Anfang oder Ende eines zu trennenden Abschnitts des Laminats erkannt werden. Anschliessend wird die Schneideinrichtung entsprechend angesteuert.

### Figurenbeschreibung

Im Folgenden wird ein bevorzugtes Ausführungsbeispiel der Erfindung anhand der beigelegten Zeichnungen eingehender erläutern, wobei die Zeichnungen zeigen:
Figur 1 eine schematische Seiteansicht einer erfindungsgemässen Vorrichtung;
Figur 2 zeigt eine beispielhafte Draufsicht auf ein Laminiermaterial mit Trägermaterial.

Das bedruckte Laminiermaterial (3) wird dann einer Laminiermaschine in der Form einer Rolle zugeführt. Das Trägermaterial (1) wird ebenfalls aufgerollt der Laminiermaschine zugeführt, und die abgerollten Bahnen des Laminiermaterials (3) und des Trägermaterials (1) in einem Laminierspalt, der zwischen der Laminierwalze (5) und der Gegendruckwalze (6) gebildet wird, mittels eines Klebstoffs unter Aufbringung von Druckkräften, zu einem Laminat (7) verbunden. Danach wird die Laminatbahn (7) einem oder mehreren Markenlesern (8) zugeführt, die die aufgedruckten Schnittmarken (befindlich auf dem mit dem Trägermaterial (1) zu einem Laminat (7) verbundenen vorgedrucktem Laminiermaterial (3)) auslesen und daraus Signale abgeleitet werden, die zur Triggerung / Steuerung einer Schneidvorrichtung (9) dienen. Auf diesem Wege werden registergenaue einzelnen Bogen aus der Laminatbahn (7) getrennt, ohne das bei dem eigentlichen Laminiervorgang auf das passergerechte Ausrichten von Laminiermaterial(3) zu dem Trägermaterial (1) geachtet werden muss.

Teile des Druckbilds auf dem Laminiermaterial (3) und / oder auf dem Laminiermaterial (3), insbesondere die aufgedruckten Marken durch einen oder mehrere Sensoren erfasst (8) und aus den erfassten Signalen Steuerungssignale für die in Transportrichtung dem oder den Sensoren (8) nachgeordnete Schneidvorrichtung (9) oder Stanzvorrichtung (9) abgeleitet. Anschliessend wird das bahnförmige Laminat (7) aus Trägermaterial (2) und Laminiermaterial (3) wieder in Einzelbogen bzw. Einzelnutzen getrennt.

In einer besonderen Ausführung kann die bedruckte Laminierbahn (3) direkt, ohne zusätzliche Aufrollung, von der Druckmaschine der Laminiereinrichtung zugeführt werden.

Der Markenleser (8) kann jede geeignete optoelektronische Sensoreinrichtung sein, z.B. eine Lasermesseinrichtung, ein andere optischer Sensor oder eine Kamera mit nachgeschalteter Bildverarbeitung. Die Schneidvorrichtung (9) kann eine mechanische Vorrichtung zum Trennen des Laminats sein, wie zum Beispiel eine Schlagschere, eine Stanzwerkzeug, ein rotierendes Messer oder eine jede andere geeignete mechanische 30 Schneidvorrichtung.

Die Schneidvorrichtung (9) kann aber auch eine berührungslose Schneidvorrichtung sein, wie zum Beispiel eine Laser- oder Wasserstrahltrennvorrichtung.

Der Klebstoff kann mit einer Klebstoffauftragsvorrichtung (4) auf die Laminiermaterialbahn (3) oder auf das Trägermaterial (2) aufgetragen werden. Der Kleberauftrag kann durch ein Walzenwerk, eine Sprühvorrichtung oder eine Düse, zum Beispiel eine Breitschlitzdüse, aufgetragen werden.

Als Klebstoffe kommen UV-vernetzende Klebstoffe, feuchtigkeitsvernetzende Klebstoffe (z.B. PUR - Klebstoffe), Harze, Hotmelt - Klebstoffe oder jeder andere geeignete Klebstoff in Betracht.

Dadurch, dass die Schnittmarken auf das Laminiermaterial vorab aufgedruckt werden, können die Kosten für die Laminiereinrichtung deutlich reduziert werden, da nicht aufwendig die Zuführung von Laminiermaterial (3) und Trägermaterial (2) miteinander synchronisiert werden müssen. Zusätzlich bietet das Verfahren grosse Spielräume bei der Wahl der Folienspannung, ohne das zu befürchten ist, dass Laminiermaterial (3) und Trägermaterial (1,2) zueinander verzogen werden. Die Schnittmarken steuern die Schneidvorrichtung (9), so dass die Registergenauigkeit in den Trennschnitt gelegt wird. Eine Schneidevorrichtung (9) lässt sich bei eventuellen vorhandenen Registerabweichungen auch leichter korrigieren, da nicht die gesamte Bahn des Laminiermaterials (3) nachgeregelt werden muss. Korrekturen lassen sich dann auf einfache Weise über den Maschinenleitstand eingeben.

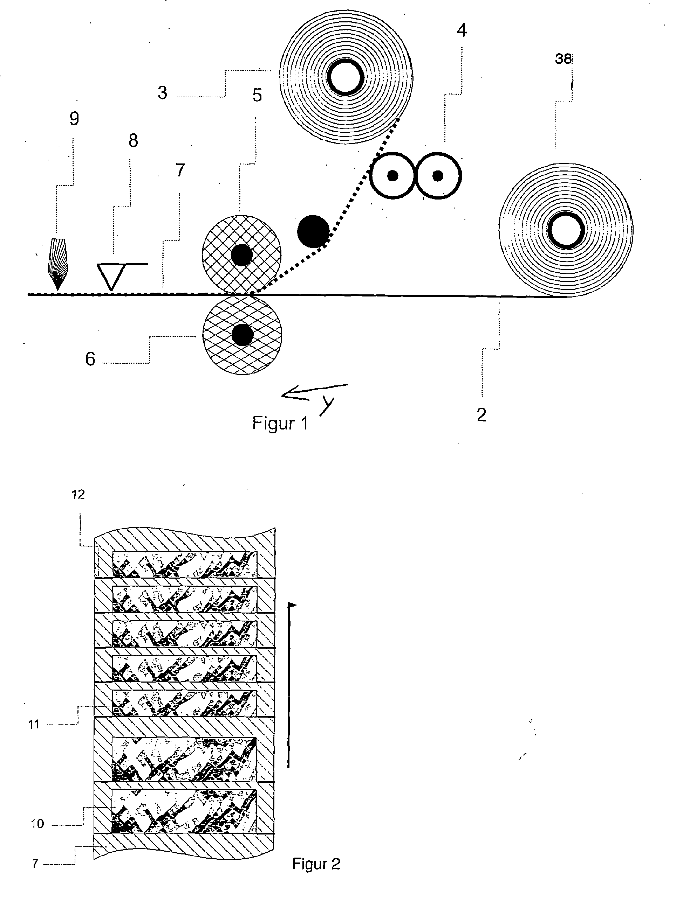

Einen besonderen Vorteil hat das Verfahren bei Einsatz eines digital bedruckten Laminiermaterials, denn die einzelnen Nutzen (10,11) können, wie die Figur 2 aufzeigt, durchaus unterschiedliche Grössen aufweisen. Ein starres Schneiden in festen Taktabständen ist nicht mehr möglich. Durch die Steuerung anhand der Schneidmarken (12) ist eine Passgenaue Taktung des Schneidvorgangs bezogen auf das Nutzendruckbild möglich und ermöglicht somit den Zusammendruck unterschiedlichster Formate.

### Bezeichnerliste

- 1: Rolle Trägermaterial
- 2: Trägermaterial abgerollt
- 3: Laminiermaterial (bedruckt)
- 4: Klebstoffauftragsvorrichtung
- 5: Kaschier- / Laminierwalze
- 6.: Gegendruckwalze
- 7: Laminat
- 8: Sensor
- 9: Schneidvorrichtung
- 10: Nutzen 1
- 11: Nutzen 2
- 12: Schneidmarken

## Patentansprüche

1. Verfahren zur Bearbeitung von einem Laminat (7) aus einem Trägermaterial (2) und einem Laminiermaterial (3), wobei
- das Trägermaterial (2) und das Laminiermaterial (3) in einem Kaschierspalt gebildet wird, bestehend aus einer Kaschierwalze (5) und einer Gegendruckwalze (6), wobei
- das Trägermaterial (2) und das Laminiermaterial (3) unter Aufbringung von Druckkräften mittels eines Klebstoffs zu dem Laminat (7) verbunden wird,
- und das Laminat (7) einer Schneidvorrichtung (9) zugeführt wird, um es dort in einzelne Abschnitte aufzutrennen
**gekennzeichnet durch** folgende Schritte:
- das Trägermaterial (2) und/oder das Laminiermaterial (3) werden mit einer Marke (12) bedruckt,
- die Marke (12) wird von einem Sensor (8) erfasst,
- der Sensor (8) übermittelt die Ergebnisse an die in Laufrichtung (y) des Laminats (7) angeordnete Schneidvorrichtung (9),
- die Schneidvorrichtung trennt aufgrund der Ergebnisse der Sensoren (8) das Laminat (7) in einzelne Abschnitte.

2. Verfahren nach Anspruch 1, **dadurch gekennzeichnet, dass** als Sensor (8) zur Erkennung der Marke (12) zumindest ein opto-elektronischer Sensor bzw. ein Lasersensor oder eine oder mehrere Kameras bzw. CCD-Sensoren mit Auswertungseinheit eingesetzt werden.

3. Verfahren nach Anspruch 1 oder 2, **dadurch gekennzeichnet, dass** der Sensor (8) in Laufrichtung (y) zwischen dem Kaschierspalt und der Schneidvorrichtung (9) eingesetzt werden.

4. Verfahren nach einem der vorigen Ansprüche, **dadurch gekennzeichnet, dass** das Laminiermaterial (3) in einem Digitaldruckverfahren, beispielsweise im Inkjet-Druck oder in einem Trocken- oder Flüssigtonerdruckverfahren bedruckt wird.

5. Verfahren nach einem der vorigen Ansprüche, **dadurch gekennzeichnet, dass** das Laminiermaterial (3) in einem konventionellen Druckverfahren, wie im Sieb-, Tief-, Flexo- oder Offset-Druck bedruckt wird.

6. Verfahren nach einem der vorigen Ansprüche, **dadurch gekennzeichnet, dass** in Laufrichtung (y) des Laminats (7) Drucknutzen unterschiedlicher Grösse auf das Laminiermaterial (3) oder das Trägermaterial (2) aufgedruckt wurden, wobei die Drucknutzen sich abschnittsweise oder von Nutzen zu Nutzen unterscheiden.

7. Vorrichtung zur Bearbeitung von einem Laminat (7), bestehend aus einem Trägermaterial (2) und einem Laminiermaterial (3), wobei das Trägermaterial (2) und das Laminiermaterial (3) in einem Kaschierspalt gebildet wird, wobei der Kaschierspalt aus einer Kaschierwalze und einer Gegendruckkaschierwalze (5) und einer Gegendruckwalze (6) besteht, wobei
- das Trägermaterial (2) und das Laminiermaterial (3) unter Aufbringung von Druckkräften mittels eines Klebstoffs zu dem Laminat (7) verbunden sind,
- und einer Schneidvorrichtung (9), geeignet zum Trennen des Laminats (7) in einzelne Abschnitte,
**dadurch gekennzeichnet, dass**
- das das Trägermaterial (2) und/oder das Laminiermaterial (3) zumindest eine Marke (12) umfassen, welche von einem Sensor (8) erfassbar ist, wobei der Sensor (8) die Ergebnisse an die Schneidvorrichtung (9) übermittelt und die Schneidvorrichtung (9) aufgrund der Ergebnisse der Sensoren (8) das Laminat (7) in einzelne Abschnitte trennt.

8. Vorrichtung nach Anspruch 7, **dadurch gekennzeichnet, dass** das Trägermaterial (1, 2) eine Blechmaterialbahn oder eine andere metallische Bahn ist.

9. Vorrichtung nach Anspruch 6 oder 7, **dadurch gekennzeichnet, dass** das Trägermaterial (1, 2) eine Faltschachtelkartonbahn ist, dessen Biegesteifigkeit zwischen 2,5 und 150 mNm, gemessen nach DIN 53121 aufweist.

10. Vorrichtung nach einem der Ansprüche 6 bis 9, **dadurch gekennzeichnet, dass** der Sensor 8, geeignet zur Erkennung der Marke (12) ein opto-elektronischer Sensor, Lasersensor, CCD-Sensor oder eine Kamera ist.

11. Vorrichtung der Ansprüche 6 bis 10, **dadurch gekennzeichnet, dass** der Sensor (8) eine nachgeschaltete Bildverarbeitung umfasst.

12. Vorrichtung nach einem der Ansprüche 6 bis 11, **dadurch gekennzeichnet, dass** der Sensor (8) in Laufrichtung (y) des Laminats (7) zwischen dem Kaschierspalt und der Schneidvorrichtung (9) angeordnet ist.

13. Vorrichtung nach einem der Ansprüche 6 bis 12, **dadurch gekennzeichnet, dass** das Trägermaterial (1, 2) und das Laminiermaterial (3) mit einer Klebstoffauftragsvorrichtung (4) zusammenwirken.

14. Vorrichtung nach Anspruch 13, **dadurch gekennzeichnet, dass** die Klebstoffauftragsvorrichtung ein Walzenauftragswerk, ein Düsenauftragswerk mit einer oder mehreren Düsen, ein Auftragswerk mit einer Breitschlitzdüse oder ein Auftragswerk ist.

15. Vorrichtung nach einem der Ansprüche 6 bis 14, **dadurch gekennzeichnet, dass** das Laminiermaterial (3) in einem Digitaldruckverfahren, wie Inkjet-Druck oder in einem Trocken- oder Flüssigtonerdruckverfahren bedruckt ist, geeignet zur Aufbringung der Marke (12) auf das Laminiermaterial (3).
